# FASCICULE DE BREVET EUROPEEN

(11) **EP 3 538 459 B1**
(45) Date de publication et mention de la délivrance du brevet: **08.01.2025**
(21) Numéro de dépôt: 17808535.3
(22) Date de dépôt: 07.11.2017
(51) Int. Cl.: B65G 47/86, B67C 7/00, B65G 47/82

(54) **SYSTEME DE CONVOYAGE D'OBJETS EN MATIERE THERMOPLASTIQUE COMPORTANT UN CORPS CREUX MUNI D'UN COL**
SYSTEM ZUM BEFÖRDERN VON GEGENSTÄNDEN AUS EINEM THERMOPLASTISCHEN MATERIAL MIT EINEM HOHLKÖRPER MIT EINEM HALS
SYSTEM FOR CONVEYING OBJECTS MADE OF A THERMOPLASTIC MATERIAL AND COMPRISING A HOLLOW BODY WITH A NECK

(30) Priorité: 09.11.2016 FR 1660848
(43) Date de publication de la demande: 18.09.2019
(73) Titulaire: Sidel Participations, 76930 Octeville-sur-Mer (FR)
(72) Inventeur: PETIT, Fabian, 76930 Octeville-sur-mer (FR); MEUNIER, Eric, 76930 Octeville-sur-mer (FR)
(74) Mandataire: Sidel Group
(86) Numéro de dépôt international: PCT/FR2017/053035
(87) Numéro de publication internationale: WO 2018/046874

(56) Documents cités:
- EP-A1- 1 251 085
- EP-A1- 1 251 085
- EP-A1- 1 970 329
- EP-A1- 1 970 329
- EP-A1- 2 641 721
- EP-A1- 2 641 721
- JP-A- 2008 044 768
- JP-A- 2008 044 768
- JP-A- 2015 067 333
- JP-A- 2015 067 333

## Description

### DOMAINE TECHNIQUE DE L'INVENTION

L'invention concerne un système de convoyage d'objets en matière thermoplastique comportant un corps creux muni d'un col, tels que des préformes ou des récipients.

### ÉTAT DE LA TECHNIQUE

L'invention concerne plus particulièrement un système de convoyage d'objets en matière thermoplastique comportant un corps creux muni d'un col, tels que des préformes ou des récipients, ledit système comportant au moins :
- une première roue munie de bras de transfert équipés chacun d'une pince pour la préhension d'un objet et entraînée autour d'un premier axe de rotation par des premiers moyens d'entraînement, et
- une deuxième roue munie de bras de transfert équipés chacun d'une pince pour la préhension d'un objet et entraînée autour d'un deuxième axe de rotation par des deuxièmes moyens d'entraînement, ladite deuxième roue étant entraînée suivant un sens opposé à celui de la première roue,
dans lequel les premiers moyens d'entraînement et les deuxièmes moyens d'entraînement sont chacun motorisés et sont synchronisés électroniquement pour opérer, en un point de transfert donné, un transfert de type pince à pince d'un objet depuis la première roue vers la deuxième roue située en aval.

On connaît de l'état de la technique des exemples d'un tel système de convoyage d'objets en matière thermoplastique qui est notamment utilisé dans une installation de fabrication de récipients à partir de préformes.

Dans une installation de fabrication de récipients en matière thermoplastique, en particulier de bouteilles, on utilise un tel système de convoyage pour assurer successivement le transfert des préformes puis celui des récipients, respectivement entre les différentes machines de l'installation.

A titre d'exemple non limitatif, le document FR-2.972.671 décrit une installation de fabrication de récipients en matière thermoplastique.

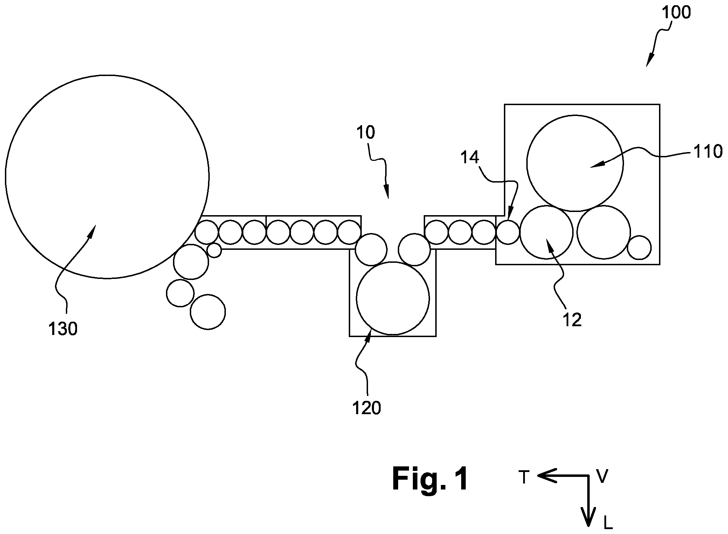

Tel qu'illustré par la figure 1 de ce document, une telle installation de fabrication comporte principalement un four pour conditionner thermiquement des préformes qui sont ensuite transférées vers une machine de moulage (ou « souffleuse ») afin d'y être transformées en récipients par soufflage (ou par étirage-soufflage) dans un moule de l'un des postes de ladite machine.

Les récipients obtenus sont ensuite transférés en aval, par exemple vers une machine de remplissage et de bouchage puis vers une machine d'étiquetage.

En variante, l'agencement de la machine de remplissage (et de bouchage) et de la machine d'étiquetage peut être inversé de manière que les récipients soient étiquetés avant d'être remplis puis fermés.

Dans une installation de fabrication de récipients, le système de convoyage assure le transfert des préformes à partir de la sortie du four puis celui des récipients, l'ensemble suivant un parcours que jalonnent les différentes étapes du procédé de fabrication.

Pour ce faire, le système de convoyage comporte une succession de dispositifs de transfert, encore appelés « roues », dont certains au moins comportent une pluralité de bras de transfert munis à leur extrémité libre d'une pince de préhension apte à assurer la préhension au niveau du col d'au moins une préforme ou d'un récipient.

Le document FR-2.972.671 décrit en outre un transfert de type « pince à pince » d'une préforme, respectivement entre une pince d'un bras d'un premier dispositif de transfert et une autre pince d'un bras d'un deuxième dispositif de transfert agencé en aval du premier.

Dans le document FR-2.972.671, la partie du système de convoyage décrite assure plus particulièrement un transfert des préformes entre la sortie du four et la machine de moulage de récipients.

Les figures 5 à 8 illustrent le transfert pince à pince d'une préforme et notamment la position respective des mors de la première pince et ceux de la deuxième pince qui coopèrent chacune avec des parties du col de la préforme décalées verticalement de manière à éviter toute interférence entre elles.

Le transfert pince à pince de la préforme s'effectue en un « point » de transfert au niveau duquel la roue formant le premier dispositif de transfert et la roue formant le deuxième dispositif de transfert sont tangentielles.

Pour assurer un tel transfert d'une pince à une autre, il est essentiel de pouvoir garantir une parfaite synchronisation entre les roues de transfert et plus généralement d'assurer cette synchronisation sur l'ensemble du parcours de convoyage à travers l'installation.

Selon une solution connue, la synchronisation est assurée mécaniquement par l'intermédiaire d'au moins une courroie reliant par exemple un dispositif de transfert entraîné en rotation par un moteur à un autre dispositif de transfert dont l'entraînement en rotation de manière synchrone est assuré par la courroie.

Une telle solution ne donne pas entière satisfaction en raison notamment des interventions de maintenance requise et on a donc recherché d'autres solutions afin de supprimer les courroies de transmission assurant en outre un entraînement en rotation synchrone des roues de transfert du système.

Selon une autre solution connue, on remédie aux inconvénients précités en supprimant toute liaison mécanique. Selon cette autre solution, la synchronisation est réalisée électroniquement au moins entre les roues de transfert. Les roues sont chacune pourvues de moyens d'entraînement en rotation constitués par exemple de moteurs asynchrones, notamment de type « brushless » (sans balais).

Les moteurs sont généralement pilotés par une unité de contrôle recevant des informations d'un ensemble de capteurs de synchronisation, de codeurs, etc. afin de pouvoir synchroniser automatiquement toute l'installation de fabrication de récipients, les roues de transfert du système de convoyage mais également les machines de moulage de récipients (ou « souffleuse »), de remplissage et bouchage, d'étiquetage, etc. Autrement dit, un tel système présente une configuration de synchronisation entre lesdits premiers et deuxièmes moyens d'entraînement, les premiers moyens d'entraînement et les deuxièmes moyens d'entraînement étant chacun motorisés et pilotés par une unité de contrôle conçue pour amener à et/ou maintenir électroniquement le système en configuration de synchronisation pour opérer, en un point de transfert donné, un transfert de type pince à pince d'un objet depuis la première roue vers la deuxième roue située en aval.

Toutefois, une telle synchronisation électronique peut présenter des dysfonctionnements notamment en cas de problèmes d'alimentation électrique, typiquement des coupures ou chutes de courant qui sont parfois fréquentes dans certains pays. Autrement dit, un tel système peut présenter une configuration désynchronisée.

Pour prévenir de tels problèmes d'alimentation électrique des moteurs, on utilise des condensateurs. L'utilisation de condensateurs permet de maintenir une alimentation électrique d'un moteur pendant une durée déterminée notamment pour permettre de procéder si nécessaire à un arrêt de l'entraînement des roues du système de convoyage et plus généralement de l'installation de fabrication.

Cependant, l'utilisation de tels condensateurs présente des inconvénients au nombre desquels figurent leur encombrement particulièrement important et leur coût.

Bien qu'envisagé, il n'est cependant pas possible d'en réduire le nombre sauf à réduire également la durée pendant laquelle les condensateurs peuvent suppléer à un défaut d'alimentation électrique.

Si l'alimentation électrique délivrée par les condensateurs est insuffisante pour permettre un arrêt sécurisé de l'entraînement des roues de transfert du système de convoyage, il existe alors un risque de désynchronisation de l'entraînement des roues de transfert avant un tel arrêt.

Or, un tel risque de désynchronisation est susceptible de provoquer un endommagement des pinces des bras de transfert.

En l'absence de synchronisation, il existe en effet au point de transfert d'une préforme ou d'un récipient, un risque important d'endommagement des pinces de préhension et ce faisant de détérioration, voire de destruction (casse), d'au moins l'une des pinces.

L'endommagement des pinces est tout particulièrement susceptible de se produire en cas de choc entre le col d'un objet (préforme ou récipient) convoyé par une pince de l'un des bras de transfert d'une première roue et une autre pince de l'un des bras de transfert d'une deuxième roue, située en aval et désynchronisée par rapport à la première roue.

En raison des cadences élevées de fabrication, les vitesses d'entraînement des roues de transfert le sont également et à cela s'ajoute le fait que le col présente généralement une quantité de matière thermoplastique importante qui se traduit par une résistance qui l'est également.

Par ailleurs, le document JP2008044768 décrit un système de convoyage d'objets avec un dispositif permettant au choix, de laisser passer des récipients le long de leur trajet de convoyage ou bien d'en rejeter. Le document JP2015 067333 divulgue les caractéristiques du préambule de la revendication 1. Le document EP1970329 décrit un système de convoyage de bouteilles entre deux roues équipées chacune de pinces. L'une des roues possède des pinces commandables en ouverture, chaque pince étant munie d'un mécanisme commandable de retrait. Le document JP2008 044768 décrit une sécheuse de bouteilles équipée d'une roue d'évacuation de bouteilles trop chauffée.

On rappelle que le col d'une préforme ou d'un récipient (comme une bouteille) en matière thermoplastique est le même, le col présentant sa forme définitive après le moulage par injection de la préforme.

Le but de l'invention est notamment de remédier au moins en partie aux inconvénients précités des solutions de l'état de la technique et de proposer une nouvelle solution pour un système de convoyage d'objets en matière thermoplastique présentant un col, ledit système demeurant avantageusement simple, fiable d'utilisation et d'une manière générale économique.

### BREF RESUME DE L'INVENTION

Dans ce but, l'invention propose un système pour le convoyage d'objets en matière thermoplastique du type décrit précédemment, caractérisé en ce que le système comporte au moins un dispositif d'éjection qui, agencé en amont du point de transfert, est commandé sélectivement en cas de désynchronisation entre lesdits premiers et deuxièmes moyens d'entraînement pour éjecter les objets convoyés par la première roue de manière à éviter tout endommagement des pinces au voisinage du point de transfert. Le dispositif d'éjection est commandé en cas de désynchronisation entre lesdits premiers et deuxièmes moyens d'entraînement. Le dispositif d'éjection comporte des moyens d'éjection qui sont agencés, en amont du point de transfert, pour entrer en contact avec au moins un objet convoyé par la première roue afin d'en provoquer l'éjection hors de la pince du bras de transfert de la première roue.

On entend par configuration de synchronisation le fait qu'à une succession d'instants périodiques, arrivent simultanément au point T de transfert, d'une part une pince de la première roue et une pince de la deuxième roue de manière à coopérer pour permettre un transfert de type pince à pince d'un objet.

Avantageusement, le dispositif d'éjection est commandé sélectivement uniquement en cas de désynchronisation entre lesdits premiers moyens d'entraînement de la première roue de transfert et les deuxièmes moyens d'entraînement de la deuxième roue de transfert située en aval et en relation avec la première roue au niveau du point de transfert des objets.

Grâce à l'invention, on élimine le risque d'endommagement des pinces au niveau du point de transfert dès lors que, en cas de désynchronisation, le dispositif d'éjection intervient en amont pour vider les pinces des bras de transfert de la première roue en éjectant les objets convoyés.

Ainsi, un col d'un objet convoyé par une première pince n'est plus susceptible de venir heurter une deuxième pince lorsque lesdites pinces se croisent au voisinage du point de transfert.

L'invention peut notamment permettre de réduire substantiellement l'utilisation des condensateurs dans un système de convoyage pour prévenir des conséquences de problèmes d'alimentation électrique tels que des coupures.

Avantageusement, l'invention permet à tout le moins de réduire la taille des condensateurs par rapport à l'art antérieur et ce faisant d'obtenir un gain de place important permettant de diminuer l'encombrement général d'une installation de fabrication de récipients comportant un système de convoyage équipé d'au moins un dispositif d'éjection.

### Selon d'autres caractéristiques de l'invention :

- l'unité de contrôle est reliée à des moyens de détermination en temps réels de la position angulaire de la première roue et de la deuxième roue par rapport à une référence machine.
- l'unité de contrôle est programmée pour détecter une configuration désynchronisée et, soit ramener le système vers la configuration synchronisée, soit pour autoriser la commande du dispositif d'éjection.

- le dispositif d'éjection comporte des moyens d'éjection qui sont montés mobiles entre au moins une position passive dans laquelle lesdits moyens d'éjection n'interfèrent pas avec le convoyage des objets par la première roue de transfert, et une position active d'éjection dans laquelle lesdits moyens d'éjection interviennent pour provoquer l'éjection des objets convoyés par la première roue de transfert ;
- le dispositif d'éjection comporte des moyens d'actionnement des moyens d'éjection pour les déplacer dans la position passive et/ou dans la position active d'éjection ;
- les moyens d'actionnement sont commandés pour maintenir les moyens d'éjection en position passive et en ce que les moyens d'éjection sont rappelés automatiquement vers la position active d'éjection ;
- les moyens d'éjection comportent au moins un organe d'éjection qui est disposé verticalement pour entrer en contact avec ledit au moins un objet au voisinage du col ;
- ledit au moins un organe d'éjection est formé par un sabre ;
- le dispositif d'éjection comporte des moyens d'éjection qui sont aptes à provoquer l'ouverture d'au moins une pince pour obtenir l'éjection de l'objet convoyé hors de la pince du bras de transfert de la première roue ;
- les moyens d'éjection comportent au moins un organe d'éjection qui est apte à agir sur au moins un mécanisme de commande d'une pince pour en provoquer l'ouverture ;
- ledit au moins un organe d'éjection est formé par une came ;
- ledit dispositif d'éjection est un premier dispositif d'éjection, le système comportant au moins un deuxième dispositif d'éjection, agencé en amont du premier dispositif d'éjection ;
- le système comporte au moins un dispositif d'éjection systématique, agencé en aval du point de transfert pour éjecter systématiquement tout objet convoyé par la première roue au-delà du point de transfert.

Selon un autre aspect de l'invention, le procédé de convoyage d'objets en matière thermoplastique comportant un corps creux muni d'un col, utilise un premier convoyeur muni d'une pluralité de premier moyens de préhension individuelle des objets à convoyer le long d'un premier chemin de convoyage, et un deuxième convoyeur muni d'une pluralité de deuxième moyens de préhension individuelle des objets à convoyer le long d'un deuxième chemin de convoyage tangent au premier chemin de convoyage en un point (T) de transfert. Le procédé comprend une étape de fonctionnement synchronisé dans laquelle chacun des premiers moyens de préhension arrivant au point (T) de transfert coopère avec un deuxième moyen de transfert complémentaire pour transférer un objet depuis le premier moyens de préhension au deuxième moyen de préhension. Selon l'invention, le procédé comprend une étape de fonctionnement désynchronisée, dans laquelle on éjecte les objets des premiers moyens de préhension avant qu'ils n'arrivent au point (T) de transfert.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de dessus qui représente un exemple de réalisation d'une installation de fabrication de récipients en matière thermoplastique et qui illustre un système de convoyage selon l'invention équipant une telle installation de fabrication ;

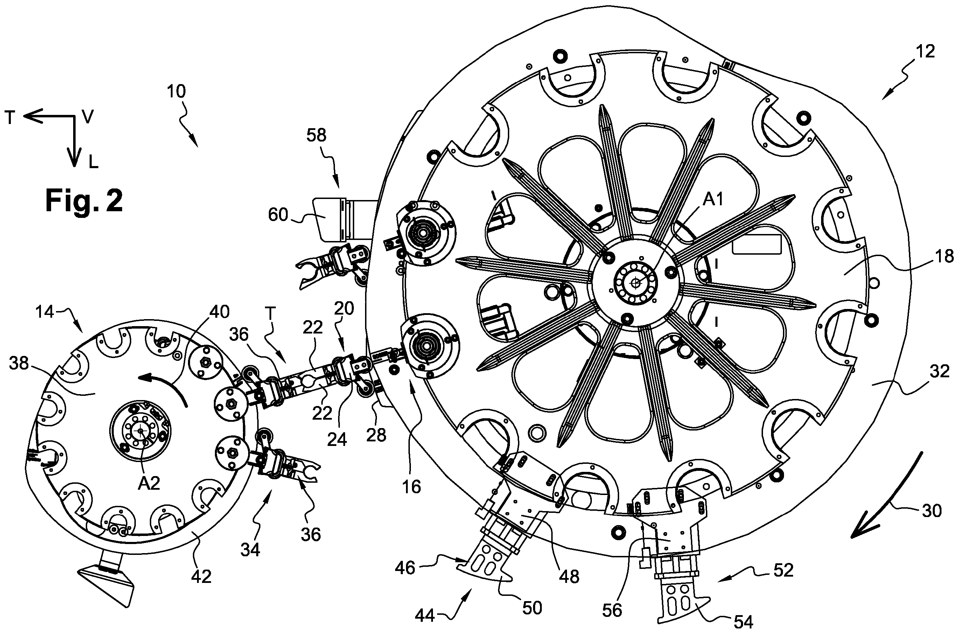

- la figure 2 est une vue de dessus qui représente une partie du système de convoyage selon la figure 1 et qui illustre plus particulièrement une première roue de transfert et une deuxième roue de transfert, ladite première roue de transfert comportant, selon un mode de réalisation de l'invention, trois dispositifs d'éjection dont l'un au moins est commandé sélectivement pour éjecter les objets convoyés en cas de désynchronisation entre les moyens d'entraînement en rotation desdites roues de transfert ;

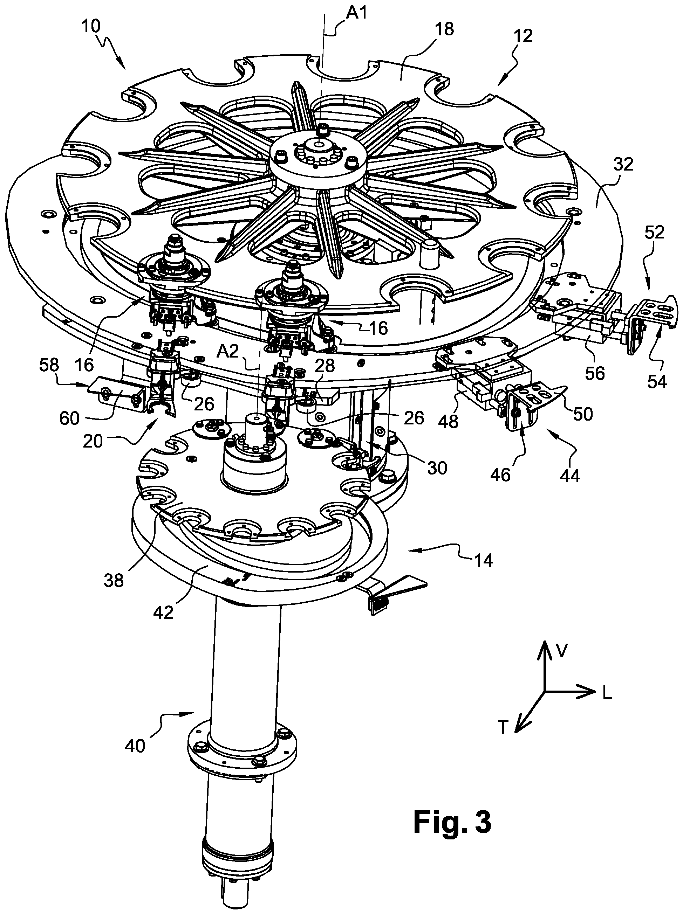

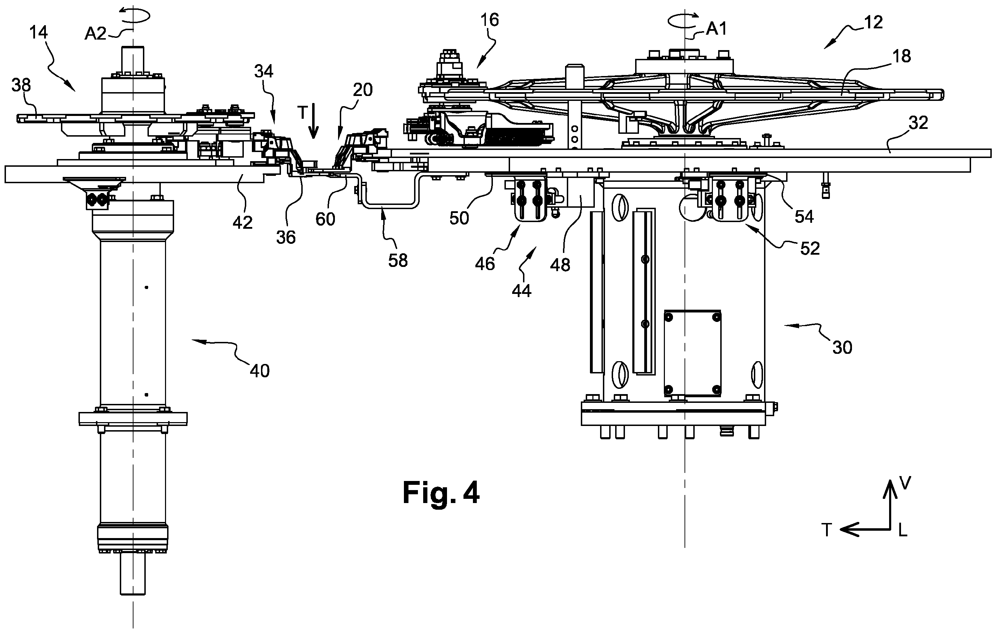

- les figures 3 et 4 sont respectivement une vue en perspective et une vue de côté qui représentent les roues de transfert selon la figure 2 et qui illustrent la disposition dudit dispositif d'éjection selon le mode de réalisation dans lequel la première roue de transfert comporte également deux autres dispositifs d'éjection.

### DESCRIPTION DETAILLEE DES FIGURES

Dans la suite de la description, on adoptera à titre non limitatif les orientations longitudinale, verticale et transversale en référence au trièdre (L, V, T) représenté sur les figures.

Par convention, les orientations longitudinale et transversale sont déterminées de manière fixe par rapport roue de transfert du système de convoyage de sorte que la position des bras de transfert comportant les pinces est sans incidence sur lesdites orientations.

On utilisera également à titre non limitatif les termes « avant » et « arrière » en référence à l'orientation longitudinale, ainsi que « supérieur » et « inférieur » ou « haut » et « bas » en référence à l'orientation verticale et enfin « gauche » et « droite » en référence à l'orientation transversale.

Les termes « amont » ou « aval » sont respectivement utilisés par rapport au sens de circulation des objets, préformes ou récipients, convoyés par les roues du système à travers l'installation.

On a représenté sur la figure 1 un exemple de réalisation d'une installation 100 de fabrication de récipients en matière thermoplastique.

La fabrication de récipients tels que des bouteilles, des flacons, des pots, etc. est réalisée à partir de préformes notamment obtenues par moulage par injection.

Une telle préforme comporte un col qui présente sa forme définitive, c'est-à-dire celle du col du récipient final obtenu à l'issue de la fabrication.

À titre d'exemple non limitatif, la matière thermoplastique utilisée est du polyéthylène téréphtalate (PET).

L'installation 100 comporte principalement un four (non représenté), une machine 110 de moulage, une machine 120 d'étiquetage et une machine 130 de remplissage.

La fabrication des récipients est obtenue de manière analogue à celle décrite précédemment en référence au document FR-2.972.671 auquel on pourra se reporter pour de plus amples détails.

Le four est destiné à conditionner thermiquement le corps creux des préformes qui sont ensuite introduites dans des moules de la machine 110 de moulage dans lesquels leur transformation par soufflage ou par étirage-soufflage en récipients est réalisée.

Dans l'exemple de réalisation, les récipients obtenus sont transférés vers la machine 120 d'étiquetage puis vers la machine 130 de remplissage.

En variante, la machine 120 d'étiquetage est agencée en aval de la machine 130 de remplissage des récipients tel qu'illustré par la figure 1 du document FR-2.972.671.

Tel qu'expliqué précédemment en préambule, une telle installation 100 comporte un système 10 de convoyage d'objets constitués de préformes puis de récipients fabriqués à partir desdites préformes.

En effet, les préformes comme les récipients constituent des objets identiques à convoyer car muni d'un même col. Le col est généralement pourvu d'une collerette qui s'étend radialement en saillie vers l'extérieur, à la jonction du col et du corps creux.

Dans la suite de la description, le terme « objet » désigne donc indifféremment une préforme ou un récipient.

Lors de leur convoyage par un tel système 10 à travers l'installation 100, l'objet est soit supporté par l'intermédiaire d'une telle collerette, soit saisi par le col par une pince, par exemple au niveau d'une gorge annulaire située verticalement au-dessus de la collerette.

Pour assurer le convoyage des objets, préformes ou récipients, le système 10 de convoyage comporte une pluralité de dispositifs de convoyage qui sont agencés pour transporter successivement lesdits objets à travers l'installation 100 de fabrication.

Le système 10 de convoyage comporte des dispositifs de convoyage de type rotatifs, représentés schématiquement pour cette raison sur la figure 1 par des cercles.

Dans l'exemple, les dispositifs de convoyage du système 10 sont aptes à assurer le convoyage des préformes puis des récipients formant lesdits objets munis d'un col et comportant un corps creux.

On distingue principalement deux types de dispositifs de convoyage selon que l'objet est supporté par l'intermédiaire de sa collerette radiale ou qu'une préhension au niveau du col est effectuée.

Dans l'exemple de réalisation et conformément à la deuxième solution précitée, chaque dispositif du système 10 de convoyage est entraîné en rotation par un moteur qui est commandé électroniquement de manière synchrone.

Quel qu'en soit le type, les dispositifs sont entrainés en rotation autour d'un axe vertical par des moyens d'entrainement motorisés, c'est la raison pour laquelle lesdits dispositifs de convoyage sont encore appelés « roues ».

Le premier type de dispositif de convoyage comporte au moins un plateau mobile circonférentiellement pourvu d'une pluralité d'encoches présentant par exemple une forme en « U » radialement ouverte vers l'extérieur.

Les objets sont introduits radialement dans les encoches et supportés par l'intermédiaire de leur collerette en appui sur le pourtour de l'encoche. Un tel dispositif est parfois appelé pour cette raison « roue à encoches ».

Le deuxième type de dispositif de convoyage comporte au moins une roue mobile pourvue d'une pluralité de bras de transfert qui sont chacun munis à leur extrémité libre d'une pince comportant deux mors.

Il existe différents types de pinces en fonction notamment de la partie de l'objet avec lequel coopèrent les mors de la pince. On distingue ainsi les pinces selon que les mors se positionnent en dessous de la collerette radiale du col de l'objet ou que les mors assurent une préhension avec un effort de serrage du col au-dessus de la collerette.

Les mors sont par exemple fixés à une extrémité libre des leviers d'une pince. Les mors sont montés mobiles entre au moins une position ouverte et une position fermée

La position ouverte correspond à une position dans laquelle l'objet peut être introduit ou extrait d'une ouverture délimitée par les mors en position fermée.

Les mors de la pince sont généralement rappelés automatiquement par des moyens de rappel, tels qu'un ressort, vers la position fermée.

Selon leur conception, on distingue encore des pinces dans lesquelles l'objet est introduit en force entre ou hors des mors par comparaison à d'autres pinces dont au moins l'ouverture est commandée par l'intermédiaire d'un mécanisme, par exemple un mécanisme d'actionnement du type à came et à galet.

On connaît de l'art antérieur de nombreux exemples de réalisation de telles pinces destinées à équiper des dispositifs de convoyage qui ne seront donc pas décrits plus en détails.

A titre d'exemple non limitatif, on pourra se reporter au document FR-2.915.475 qui décrit notamment un mécanisme de commande d'ouverture et de fermeture des leviers d'une pince de préhension d'une préforme dans une installation de fabrication de récipients de type linéaire.

On pourra également se reporter aux autres documents FR-2.479.077 (figures 10 et 11) ou FR-2.774.666 qui illustrent des exemples de réalisation de pinces.

On a représenté sur les figures 2 à 4 une partie seulement du système 10 de convoyage selon la figure 1.

Le système 10 de convoyage comporte au moins un premier dispositif 12 de convoyage et un deuxième dispositif 14 de convoyage d'objets, respectivement désignés ci-après première roue 12 et deuxième roue 14.

Tel qu'illustré sur la figure 1, la première roue 12 est agencée en aval de la machine 110 de moulage, ici directement en sortie, et la deuxième roue 14 est située immédiatement en aval de la première roue 12.

Les objets convoyés par la première roue 12 et la deuxième roue 14 sont par conséquent constitués par des récipients, par exemple des bouteilles.

La première roue 12 est munie d'une pluralité de bras 16 de transfert qui sont répartis circonférentiellement de manière régulière sur un plateau 18 tournant.

On a représenté sur la figure 2 uniquement deux de ces bras 16 de transfert dans le secteur angulaire comportant notamment un point de transfert qui est référencé « T » et correspond au point auquel s'opère le transfert des récipients de la première roue 12 vers la deuxième roue 14.

Chaque bras 16 de transfert est équipé d'une pince 20 pour la préhension d'au moins un objet, ici un récipient.

Selon un mode de réalisation non limitatif, la pince 20 prend un récipient dans un moule (non représenté) le long d'un carrousel de la machine 110 de soufflage et amène ce récipient dans un bras de la deuxième roue 14, comme illustré en figure 1.

Avantageusement, mais non obligatoirement, le bras 16 est pivotant selon un premier chemin de came visible en figure 3 et la pince 20 est mobile en translation le long du bras 16 en suivant un rebord extérieur de came visible en figure 3. Ainsi deux récipients successifs séparés d'un premier pas le long du carrousel de soufflage, sont amenés le long de la deuxième roue 14 avec un deuxième pas plus réduit que le premier pas.

Toutefois, la première roue 12 et la deuxième roue 14 peuvent se trouver à n'importe quel endroit le long d'un chemin de convoyage d'objets, notamment lorsque ce convoyage des objets se fait de manière continue et au cours duquel chaque objets est tenu individuellement.

La pince 20 comporte deux mors 22 qui sont montés mobiles entre une position ouverte et une position fermée.

De préférence, la pince 20 comporte des moyens de rappel élastique des mors vers la position fermée et un mécanisme 24 pour commander sélectivement la pince 20 en position d'ouverture, à l'encontre desdits moyens de rappel élastique.

Le mécanisme 24 de commande d'ouverture de la pince 20 comporte au moins un galet 26 qui est destiné à coopérer avec une came 28.

La première roue 12 est entraînée autour d'un premier axe A1 de rotation par des premiers moyens 30 d'entraînement comportant au moins un moteur (non représenté).

La came 28 est par exemple solidaire d'un plateau 32 de support qui est fixe par rapport au plateau 18 mobile comportant les bras 16 de transfert et entraîné en rotation par les premiers moyens 30 d'entraînement.

La deuxième roue 14 est de conception similaire à celle de la première roue 12.

La deuxième roue 14 est munie d'une pluralité de bras 34 de transfert équipés chacun d'une pince 36 pour la préhension d'au moins un récipient formant ici ledit objet convoyé dans cette partie de l'installation par le système 10 de convoyage.

Comme précédemment, une partie seulement des bras 34 de transfert a été représentée, plus précisément deux bras 34 dont l'un en position de transfert pince à pince avec une pince 20 de transfert de la première roue 12.

La deuxième roue 14 comporte un plateau 38 mobile auquel les bras 34 de transfert sont liés en déplacement.

La deuxième roue 14 est entraînée par des deuxièmes moyens 40 d'entraînement autour d'un deuxième axe A2 de rotation, la deuxième roue 14 étant entraînée suivant un sens de rotation opposé à celui de la première roue 12.

La deuxième roue 14 comporte un plateau 42 de support fixe par rapport au plateau 38 entraîné en rotation.

Les premiers moyens 30 d'entraînement et les deuxièmes moyens 40 d'entraînement respectivement motorisés sont synchronisés électroniquement pour opérer, au point T de transfert, un transfert de type pince à pince des récipients depuis la première roue 12 vers la deuxième roue 14 située en aval.

Le système 10 de convoyage comporte au moins un dispositif 44 d'éjection qui est agencé en amont du point T de transfert.

De préférence, le dispositif 44 d'éjection est porté par la première roue 12, par exemple fixé au plateau 18.

Le dispositif 44 d'éjection est commandé sélectivement en cas de désynchronisation entre les premiers moyens 30 d'entraînement et les deuxièmes moyens 40 d'entraînement, notamment consécutive à un problème d'alimentation électrique.

Le dispositif 44 d'éjection a pour fonction d'éjecter, en cas de désynchronisation, les récipients convoyés par la première roue 12 de transfert de manière à éviter tout endommagement des pinces 20 et/ou des pinces 36 au voisinage du point T de transfert.

Un endommagement des pinces est notamment susceptible de se produire en cas de choc entre le col d'un récipient convoyé par une pince 20 de l'un des bras 16 de transfert de la première roue 12 et une pince 36 de l'un des bras 34 de transfert de la deuxième roue 14, désynchronisée par rapport à la première roue 12.

Le dispositif 44 d'éjection est commandé sélectivement entre un état passif occupé lorsque les premiers moyens 30 d'entraînement et les deuxièmes moyens 40 d'entraînement sont synchronisés et un état actif d'éjection occupé uniquement lorsque les premiers moyens 30 d'entraînement et les deuxièmes moyens 40 d'entraînement sont désynchronisés.

Selon le mode de réalisation illustré par les figures 2 à 4, le dispositif 44 d'éjection comporte des moyens 46 d'éjection qui sont montés mobiles entre au moins une position passive et une position active d'éjection correspondant auxdits états.

La position passive correspond à une position dans laquelle lesdits moyens 46 d'éjection n'interfèrent pas avec le convoyage des récipients par la première roue 12 de transfert.

La position active d'éjection correspond à une position dans laquelle lesdits moyens 46 d'éjection interviennent pour provoquer l'éjection des récipients convoyés par la première roue 12 de transfert.

Le dispositif 44 d'éjection comporte des moyens 48 d'actionnement des moyens 46 d'éjection pour les déplacer dans l'une au moins desdites positions passive et active d'éjection.

De préférence, les moyens 48 d'actionnement sont commandés pour maintenir les moyens 46 d'éjection en position passive qui sont rappelés automatiquement vers la position active d'éjection.

Avantageusement, les moyens 48 d'actionnement du dispositif 44 d'éjection sont constitués par au moins un vérin pneumatique.

Par comparaison à d'autres moyens d'actionnement de type électrique, le fonctionnement d'un vérin pneumatique sera moins sensible au problème d'alimentation électrique.

Le vérin pneumatique est par exemple associé à un distributeur afin d'être commandé sélectivement et rappelé automatiquement vers la position active d'éjection.

Les moyens 48 d'actionnement peuvent également comporter des moyens de rappel élastique tels qu'un ressort.

Le dispositif 44 d'éjection comporte des moyens 46 d'éjection qui sont agencés en amont du point T de transfert afin d'entrer en contact avec les récipients convoyés par la première roue 12 et pour provoquer alors systématiquement l'éjection de chaque récipient hors de la pince 20 du bras 16 de transfert de la première roue 12.

Les moyens 46 d'éjection comportent au moins un organe 50 d'éjection qui est formé par au moins un sabre.

L'organe 50 d'éjection formé par ledit au moins un sabre est déplacé en translation entre lesdites positions passive et active d'éjection par le vérin formant les moyens 48 d'actionnement.

Avantageusement, l'organe 50 d'éjection est en position active d'éjection déployé sur le trajet des récipients et agencé verticalement à une hauteur déterminée pour entrer en contact avec les récipients au voisinage du col.

En variante non représentée, les moyens 46 d'éjection comportent plus d'un organe 50 d'éjection, par exemple au moins un autre sabre décalé verticalement vers le bas par rapport au premier sabre et destiné à entrer en contact avec le corps des récipients.

Le récipient convoyé par la pince 20 vient par conséquent heurter le sabre formant l'organe 50 d'éjection ce qui va provoquer son éjection hors des mors 22 de la pince 20 qui s'ouvrent sous l'effet de l'impact libérant alors le récipient.

Le récipient éjecté par le sabre tombe alors par gravité de préférence dans des moyens de collecte, tels que des bacs, disposés pour récupérer les récipients éjectés, notamment afin d'en faciliter ensuite l'évacuation.

Selon le mode de réalisation illustré par les figures 2 à 4, le dispositif 44 d'éjection ne constitue avantageusement que l'un des dispositifs d'éjection associés à la première roue 12.

La première roue 12 du système 10 comporte au moins un autre dispositif 52 d'éjection, dit deuxième, qui est agencé en amont du premier dispositif 44 d'éjection.

Le deuxième dispositif 52 d'éjection a une fonction différente de celle du premier dispositif 44 d'éjection destiné à intervenir en cas de désynchronisation.

Le deuxième dispositif 52 d'éjection est commandé pour éliminer sélectivement au moins un objet, préforme ou récipient, en fonction d'autres conditions déterminées.

De manière non limitative, le deuxième dispositif 52 d'éjection est notamment utilisé en cas d'un défaut détecté sur un récipient nécessitant son élimination pour absence de conformité ou encore pour réaliser un prélèvement d'échantillon à des fins de contrôle qualité du récipient fabriqué.

De préférence, le deuxième dispositif 52 d'éjection est identique au premier dispositif 44 d'éjection et comporte au moins un sabre 54 d'éjection.

Le sabre 54 formant l'organe d'éjection est ainsi déplacé en translation entre lesdites positions passive et active par des moyens 56 d'actionnement, tel qu'un vérin.

Avantageusement, le système comporte au moins un dispositif (58) d'éjection systématique, qui est agencé en aval du point T de transfert pour éjecter systématiquement tout récipient convoyé par la première roue 12.

Le dispositif 58 d'éjection systématique est destiné à interdire tout retour d'un récipient convoyé par la première roue 12 en aval du point T de transfert, tel qu'un récipient non transféré vers la deuxième roue 14 ou encore non éjecté par ledit premier dispositif 44 d'éjection.

Dans le cas où la première roue est adjacente au carrousel de soufflage, le dispositif 58 d'éjection systématique évite qu'une pince revenant vers un moule soit encore occupée par un récipient au lieu d'être disponible pour se saisir d'un récipient nouvellement soufflé.

Un tel dispositif 58 d'éjection systématique peut être un troisième dispositif 58 d'éjection s'ajoutant au premier dispositif 44 d'éjection et au deuxième dispositif 52 d'éjection. Le dispositif 58 d'éjection systématique peut être un autre dispositif 58 d'éjection s'ajoutant au dispositif 44 d'éjection.

Le troisième dispositif 58 d'éjection comporte au moins un organe 60 d'éjection qui est agencé de manière fixe par rapport à la première roue 12 de transfert afin interdire tout retour de récipient.

Comme le premier dispositif 44 d'éjection et le deuxième dispositif 52 d'éjection, le troisième dispositif 58 d'éjection est solidaire de la première roue 12 du système 10 de convoyage.

De préférence, l'organe 60 d'éjection est un sabre fixe qui est agencé pour éjecter systématiquement hors de la pince 20 d'un bras 16 de transfert de la première roue 12 tous récipients présents.

Avantageusement et comme le sabre 50 ou 54, l'organe 60 d'éjection du troisième dispositif 58 d'éjection est disposé verticalement en hauteur pour entrer en contact avec le récipient au voisinage du col.

De préférence, le premier dispositif 44 d'éjection est agencé au plus près du point T de transfert de manière à éjecter en amont l'ensemble des récipients en cas de désynchronisation.

Toutefois, un récipient éjecté par le premier dispositif 44 d'éjection à proximité du point T de transfert où se croisent les pinces 20 et 36 pourrait également selon sa trajectoire venir provoquer un endommagement des pinces.

C'est la raison pour laquelle, le premier dispositif 44 d'éjection est préférentiellement agencé en amont du point T de transfert.

Cependant, il existe alors une possibilité qu'au moins un récipient s'intercale entre le premier dispositif 44 d'éjection et le point T de transfert, ledit au moins un récipient continuant d'être convoyé par la pince 20 d'un bras 16 de transfert pouvant alors provoquer des dommages.

Pour prévenir ce risque, un compromis consiste à maintenir une utilisation réduite de condensateurs dont le nombre sera notamment déterminé en fonction du secteur angulaire à couvrir entre le premier dispositif 44 d'éjection et le point T de transfert, du nombre de récipient pouvant d'intercaler et provoquer un endommagement des pinces.

Selon un autre mode de réalisation (non représenté), le dispositif 44 d'éjection comporte des moyens 46 d'éjection qui sont aptes à provoquer l'ouverture d'au moins une pince 20 pour obtenir l'éjection de l'objet convoyé, préforme ou récipient, hors de la pince 20 du bras 34 de transfert de la première roue 12.

Les moyens 46 d'éjection comportent au moins organe 50 d'éjection qui est formé par une came.

La came formant l'organe 50 d'éjection est apte à agir sur le mécanisme 24 de commande d'une ou plusieurs pinces 20 pour en provoquer l'ouverture afin d'en éjecter les objets, préformes ou récipients, qui vont alors chuter par gravité.

Comme le sabre selon le mode de réalisation illustré par les figures 2 à 4, la came est montée mobile entre une position passive et une position active d'éjection et commandée en déplacement dans au moins l'une desdites positions par l'intermédiaire de moyens 48 d'actionnement.

La came est configurée pour provoquer une ouverture de la pince 20, le cas échéant à l'encontre de moyens de rappel des mors 22 de la pince vers une position fermée.

## Revendications

1. Système (10) de convoyage d'objets en matière thermoplastique comportant un corps creux muni d'un col, ledit système (10) comportant au moins :
- une première roue (12) munie de bras (16) de transfert équipés chacun d'une pince (20) pour la préhension d'un objet et entraînée autour d'un premier axe (A1) de rotation par des premiers moyens (30) d'entraînement, et
- une deuxième roue (14) munie de bras (34) de transfert équipés chacun d'une pince (36) pour la préhension d'un objet et entraînée autour d'un deuxième axe (A2) de rotation par des deuxièmes moyens (40) d'entraînement, ladite deuxième roue (14) étant entraînée suivant un sens opposé à celui de la première roue (12),
dans lequel le système présente une configuration de synchronisation entre lesdits premiers et deuxièmes moyens (30, 40) d'entraînement, les premiers moyens (30) d'entraînement et les deuxièmes moyens (40) d'entraînement étant chacun motorisés et pilotés par une unité de contrôle conçue pour amener à et/ou à maintenir électroniquement le système en configuration de synchronisation pour opérer, en un point (T) de transfert donné, un transfert de type pince à pince d'un objet depuis la première roue (12) vers la deuxième roue (14) située en aval,
**caractérisé en ce que** le système (10) comporte au moins un dispositif (44) d'éjection qui, agencé en amont du point (T) de transfert et comprenant des moyens (46) d'éjection, est commandé sélectivement en cas de désynchronisation entre lesdits premiers et deuxièmes moyens (30, 40) d'entraînement pour que lesdits moyens (46) d'éjection entrent en contact avec au moins un objet convoyé par la première roue (12) afin d'en provoquer l'éjection hors de la pince (20) du bras (16) de transfert de la première roue (12) de manière à éviter tout endommagement des pinces (20, 36) au voisinage du point (T) de transfert.

2. Système selon la revendication 1, **caractérisé en ce que** lesdits moyens (46) d'éjection sont montés mobiles entre au moins :
- une position passive dans laquelle lesdits moyens (46) d'éjection n'interfèrent pas avec le convoyage des objets par la première roue (12) de transfert, et
- une position active d'éjection dans laquelle lesdits moyens (46) d'éjection interviennent pour provoquer l'éjection des objets convoyés par la première roue (12) de transfert.

3. Système selon la revendication 2, **caractérisé en ce que** le dispositif (44) d'éjection comporte des moyens (48) d'actionnement des moyens (46) d'éjection pour les déplacer dans la position passive et/ou dans la position active d'éjection.

4. Système selon la revendication 3, **caractérisé en ce que** les moyens (48) d'actionnement sont commandés pour maintenir les moyens (46) d'éjection en position passive et **en ce que** les moyens (46) d'éjection sont rappelés automatiquement vers la position active d'éjection.

5. Système selon l'une quelconque des revendications 1 à 4, **caractérisé en ce que** les moyens (46) d'éjection comportent au moins un organe (50) d'éjection qui est disposé verticalement pour entrer en contact avec ledit au moins un objet au voisinage du col.

6. Système selon l'une quelconque des revendications précédentes, **caractérisé en ce que** le dispositif (44) d'éjection comporte des moyens (46) d'éjection supplémentaires qui sont aptes à provoquer l'ouverture d'au moins une pince (20) pour obtenir l'éjection de l'objet convoyé hors de la pince (20) du bras (16) de transfert de la première roue (12).

7. Système selon la revendication 6, **caractérisé en ce que** les moyens (46) d'éjection supplémentaires comportent au moins un organe (50) d'éjection qui est apte à agir sur au moins un mécanisme (24) de commande d'une pince (20) pour en provoquer l'ouverture.

8. Système selon l'une quelconque des revendications précédentes, **caractérisé en ce que** ledit dispositif (44) d'éjection est un premier dispositif d'éjection, le système (10) comportant au moins un deuxième dispositif (52) d'éjection agencé en amont du premier dispositif (44) d'éjection.

9. Système selon l'une quelconque des revendications précédentes, **caractérisé en ce que** le système (10) comporte au moins un dispositif (58) d'éjection systématique agencé en aval du point (T) de transfert pour éjecter systématiquement tout objet convoyé par la première roue (12) au-delà du point (T) de transfert.

10. Procédé de convoyage d'objets en matière thermoplastique comportant un corps creux muni d'un col, le procédé utilisant un premier convoyeur muni d'une pluralité de premier moyens de préhension individuelle des objets à convoyer le long d'un premier chemin de convoyage, et un deuxième convoyeur muni d'une pluralité de deuxième moyens de préhension individuelle des objets à convoyer le long d'un deuxième chemin de convoyage tangent au premier chemin de convoyage en un point (T) de transfert , le procédé comprenant une étape de fonctionnement synchronisé dans laquelle chacun des premiers moyens de préhension arrivant au point (T) de transfert coopère avec un deuxième moyen de transfert complémentaire pour transférer un objet depuis le premier moyen de préhension au deuxième moyen de préhension, **caractérisé en ce qu'**il comprend une étape de fonctionnement désynchronisée, dans laquelle on éjecte les objets des premiers moyens de préhension avant qu'il n'arrivent au point (T) de transfert au moyen du système suivant l'une quelconque des revendications 1 à 9.

## Patentansprüche

1. System (10) zur Förderung von Gegenständen aus thermoplastischem Material mit einem Hohlkörper mit einem Hals, wobei das System (10) wenigstens Folgendes beinhaltet:
- ein erstes Rad (12), das mit Übergabearmen (16) versehen ist, die jeweils mit einer Zange (20) zum Greifen eines Gegenstands ausgerüstet sind, und von ersten Antriebsmitteln (30) um eine erste Drehachse (A1) angetrieben wird, und
- ein zweites Rad (14), das mit Übergabearmen (34) versehen ist, die jeweils mit einer Zange (36) zum Greifen eines Gegenstands ausgerüstet sind, und von zweiten Antriebsmitteln (40) um eine zweite Drehachse (A2) angetrieben wird, wobei das zweite Rad (14) in einer Richtung angetrieben wird, die der des ersten Rads (12) entgegengesetzt ist,
wobei das System eine Konfiguration zur Synchronisation zwischen den ersten und zweiten Antriebsmitteln (30, 40) aufweist, wobei die ersten Antriebsmittel (30) und die zweiten Antriebsmittel (40) jeweils motorgetrieben sind und von einer Steuereinheit angesteuert werden, die dazu ausgebildet ist, das System elektronisch in die Synchronisationskonfiguration zu bringen und darin zu halten, um an einem bestimmten Übergabepunkt (T) eine Zange-zu-Zange-Übergabe eines Gegenstands vom ersten Rad (12) zum zweiten Rad (14), das sich stromab befindet, vorzunehmen,
**dadurch gekennzeichnet, dass** das System (10) wenigstens eine Auswurfvorrichtung (44) beinhaltet, die, angeordnet stromauf des Übergabepunkts (T) und Auswurfmittel (46) umfassend, im Falle einer Desynchronisation zwischen den ersten und zweiten Antriebsmitteln (30, 40) selektiv gesteuert wird, damit die Auswurfmittel (46) mit wenigstens einem Gegenstand, der vom ersten Rad (12) gefördert wird, in Kontakt treten, um dessen Auswurf aus der Zange (20) des Übergabearms (16) des ersten Rads (12) zu bewirken, um jegliche Beschädigung der Zangen (20, 36) in der Nähe des Übergabepunkts (T) zu vermeiden.

2. System nach Anspruch 1, **dadurch gekennzeichnet, dass** die Auswurfmittel (46) zwischen wenigstens folgenden Positionen beweglich angebracht sind:
- einer passiven Position, in der die Auswurfmittel (46) das Fördern der Gegenstände durch das erste Übergaberad (12) nicht stören, und
- einer aktiven Auswurfposition, in der die Auswurfmittel (46) eingreifen, um den Auswurf der Gegenstände, die vom ersten Übergaberad (12) gefördert werden, zu bewirken.

3. System nach Anspruch 2, **dadurch gekennzeichnet, dass** die Auswurfvorrichtung (44) Mittel (48) zur Betätigung der Auswurfmittel (46) beinhaltet, um sie in die passive Position und/oder in die aktive Auswurfposition zu bewegen.

4. System nach Anspruch 3, **dadurch gekennzeichnet, dass** die Betätigungsmittel (48) gesteuert werden, um die Auswurfmittel (46) in der passiven Position zu halten, und dadurch, dass die Auswurfmittel (46) automatisch in die aktive Auswurfposition zurückgestellt werden.

5. System nach einem der Ansprüche 1 bis 4, **dadurch gekennzeichnet, dass** die Auswurfmittel (46) wenigstens ein Auswurforgan (50) beinhalten, das vertikal angeordnet ist, um mit dem wenigstens einen Gegenstand in der Nähe des Halses in Kontakt zu treten.

6. System nach einem der vorhergehenden Ansprüche, **dadurch gekennzeichnet, dass** die Auswurfvorrichtung (44) zusätzliche Auswurfmittel (46) beinhaltet, die geeignet sind, die Öffnung wenigstens einer Zange (20) zu bewirken, um den Auswurf des geförderten Gegenstands aus der Zange (20) des Übergabearms (16) des ersten Rads (12) zu erreichen.

7. System nach Anspruch 6, **dadurch gekennzeichnet, dass** die zusätzlichen Auswurfmittel (46) wenigstens ein Auswurforgan (50) beinhalten, das geeignet ist, auf wenigstens einen Mechanismus (24) zur Steuerung einer Zange (20) zu wirken, um deren Öffnung zu bewirken.

8. System nach einem der vorhergehenden Ansprüche, **dadurch gekennzeichnet, dass** die Auswurfvorrichtung (44) eine erste Auswurfvorrichtung ist, wobei das System (10) wenigstens eine zweite Auswurfvorrichtung (52) beinhaltet, die stromauf der ersten Auswurfvorrichtung (44) angeordnet ist.

9. System nach einem der vorhergehenden Ansprüche, **dadurch gekennzeichnet, dass** das System (10) eine Vorrichtung (58) zum systematischen Auswurf beinhaltet, die stromab des Übergabepunkts (T) angeordnet ist, um jedes Objekt, das vom ersten Rad (12) über den Übergabepunkt (T) hinweg gefördert wird, systematisch auszuwerfen.

10. Verfahren zur Förderung von Gegenständen aus thermoplastischem Material mit einem Hohlkörper mit einem Hals, wobei bei dem Verfahren ein erster Förderer mit einer Mehrzahl von ersten Mitteln zum einzelnen Greifen der Gegenstände, die einen ersten Förderweg entlang zu fördern sind, und ein zweiter Förderer mit einer Mehrzahl von zweiten Mitteln zum einzelnen Greifen der Gegenstände, die einen zweiten Förderweg entlang zu fördern sind, der den ersten Förderweg an einem Übergabepunkt (T) tangiert, verwendet wird, wobei das Verfahren einen Schritt des synchronisierten Betriebs umfasst, bei dem jedes der ersten Greifmittel, das am Übergabepunkt (T) eintrifft, mit einem zweiten, ergänzenden Übergabemittel zusammenwirkt, um einen Gegenstand vom ersten Greifmittel an das zweite Greifmittel zu übergeben, **dadurch gekennzeichnet, dass** es einen Schritt des desynchronisierten Betriebs umfasst, bei dem die Gegenstände aus den ersten Greifmitteln ausgeworfen werden, bevor sie am Übergabepunkt (T) eintreffen, mittels des Systems nach einem der Ansprüche 1 bis 9.

## Claims

1. System (10) for conveying objects made of thermoplastic material and comprising a hollow body provided with a neck, said system (10) comprising at least:
- a first wheel (12), which is provided with transfer arms (16) each equipped with a gripper (20) for grasping an object and is driven about a first axis (A1) of rotation by first drive means (30), and
- a second wheel (14), which is provided with transfer arms (34) each equipped with a gripper (36) for grasping an object and is driven about a second axis (A2) of rotation by second drive means (40), said second wheel (14) being driven in a direction counter to that of the first wheel (12),
wherein the system has a configuration of synchronization between said first and second drive means (30, 40), the first drive means (30) and the second drive means (40) each being motor-powered and controlled by a control unit designed to electronically bring the system into and/or keep the system in the synchronization configuration in order to carry out, at a given transfer point (T), a gripper-to-gripper transfer of an object from the first wheel (12) to the second wheel (14) situated downstream, **characterized in that** the system (10) comprises at least one ejection device (44) that, arranged upstream of the transfer point (T) and comprising ejection means (46), is selectively controlled in the event of desynchronization between said first and second drive means (30, 40) so that said ejection means (46) come into contact with at least one object conveyed by the first wheel (12) in order to cause said object to be ejected from the gripper (20) of the transfer arm (16) of the first wheel (12) so as to avoid any damage to the grippers (20, 36) in the vicinity of the transfer point (T).

2. System according to Claim 1, **characterized in that** said ejection means (46) are mounted so as to be able to move between at least:
- a passive position in which said ejection means (46) do not interfere with the conveying of the objects by the first transfer wheel (12), and
- an active ejection position in which said ejection means (46) intervene in order to cause the objects conveyed by the first transfer wheel (12) to be ejected.

3. System according to Claim 2, **characterized in that** the ejection device (44) comprises means (48) for actuating the ejection means (46) in order to move them into the passive position and/or into the active ejection position.

4. System according to Claim 3, **characterized in that** the actuating means (48) are controlled to keep the ejection means (46) in the passive position and **in that** the ejection means (46) are automatically returned to the active ejection position.

5. System according to any one of Claims 1 to 4, **characterized in that** the ejection means (46) comprise at least one ejection member (50), which is arranged vertically in order to come into contact with said at least one object in the vicinity of the neck.

6. System according to any one of the preceding claims, **characterized in that** the ejection device (44) comprises additional ejection means (46), which are able to cause at least one gripper (20) to open in order to eject the conveyed object from the gripper (20) of the transfer arm (16) of the first wheel (12).

7. System according to Claim 6, **characterized in that** the additional ejection means (46) comprise at least one ejection member (50), which is able to act on at least one mechanism (24) for controlling a gripper (20) in order to cause the latter to open.

8. System according to any one of the preceding claims, **characterized in that** said ejection device (44) is a first ejection device, the system (10) comprising at least one second ejection device (52) arranged upstream of the first ejection device (44).

9. System according to any one of the preceding claims, **characterized in that** the system (10) comprises at least one systematic ejection device (58) arranged downstream of the transfer point (T) for systematically ejecting any object conveyed by the first wheel (12) beyond the transfer point (T).

10. Method for conveying objects made of thermoplastic material and comprising a hollow body provided with a neck, the method using a first conveyor provided with a plurality of first means for individually grasping the objects to be conveyed along a first conveying path, and a second conveyor provided with a plurality of second means for individually grasping the objects to be conveyed along a second conveying path tangent to the first conveying path at a transfer point (T), the method comprising a step of synchronized operation in which each of the first grasping means arriving at the transfer point (T) cooperates with a complementary second transfer means in order to transfer an object from the first grasping means to the second grasping means, **characterized in that** it comprises a step of desynchronized operation in which the objects are ejected from the first grasping means before they arrive at the transfer point (T) by means of the system according to any one of Claims 1 to 9.
